# EUROPÄISCHE PATENTANMELDUNG

(11) **EP 2 930 197 A1**
(43) Veröffentlichungstag der Anmeldung: **14.10.2015**
(21) Anmeldenummer: 14164126.6
(22) Anmeldetag: 10.04.2014
(51) Int. Cl.: C08G 18/28, C09J 5/00, C09J 175/04, C08G 65/336, C09J 171/02, C09J 201/10

(54) **Silanterminierter klebstoff zum verfugen von fugen in der marine**

(71) Anmelder: Sika Technology AG, 6340 Baar (CH)
(72) Erfinder: MENNECKE, Klaas, 79807 Lottstetten (DE)
(74) Vertreter: Sika Patent Attorneys

(57) **Zusammenfassung**

Die vorliegende Erfindung betrifft die Verwendung eines Klebstoffs, der mindestens ein silanfunktionelles Polymer P; mindestens einen Katalysator für die Vernetzung von silanfunktionellen Polymeren, ausgewählt aus der Gruppe bestehend aus Organotitanat, Organozirconat und Organoaluminat; mindestens eine Base; sowie mindestens einen Haftvermittler ausgewählt aus Alkoxymercaptosilan und Aminoalkoxysilan umfasst, zum Füllen von Holzfugen, wobei der in die Holzfuge gefüllte Klebstoff vorzugsweise nach der Aushärtung geschliffen wird.

Der Klebstoff zeigt eine hohe UV-Stabilität und Stabilität gegenüber feuchtwarmem Klima. Er eignet sich daher insbesondere für marine Anwendungen, wie Boots- und Schiffsbau. Der Klebstoff kann z.B. schwarz, weiß oder grau formuliert werden.

## Beschreibung

### Technisches Gebiet

Die vorliegende Erfindung betrifft die Verwendung eines Klebstoffs zum Verfugen von Holzfugen sowie ein Verfahren zum Verfugen der Holzfuge mit dem Klebstoff.

### Stand der Technik

Zusammensetzungen auf Basis silanfunktioneller Polymere und deren Verwendung als Klebstoffe, Dichtstoffe oder Beschichtungen sind seit längerem bekannt und vielfach beschrieben. Bekannt ist weiterhin der Einsatz von Mercaptosilanen in derartigen Zusammensetzungen zur Verbesserung der Haftung auf unterschiedlichen Substraten, wodurch das Verkleben, Abdichten oder Beschichten dieser Substrate ohne vorgängige Anwendung eines Primers möglich ist.

So beschreibt z.B. EP2098548B1 eine Zusammensetzung umfassend ein silanfunktionelles Polymers, 3-Mercaptopropyltrimethoxysilan und ein Organotitanat. Diese Druckschrift befasst sich insbesondere mit der Verbesserung der Hafteigenschaften auf porösen Substraten.

Insbesondere beim Auffüllen bzw. Verfugen von Fugen im Marinebereich ist eine hohe UV-Stabilität erforderlich. Weitere Anforderungen an die eingesetzten Materialien sind Schleifbarkeit, eine hohe Vergilbungsbeständigkeit, insbesondere bei weißen Formulierungen, und Stabilität bei feucht-warmen Bedingungen.

Bisher wurden insbesondere Polyurethane für solche Anwendungen untersucht. Damit auch weiße Formulierungen möglich sind, muss ein aliphatisches Polyurethansystem verwendet werden.

Kommerzielle aliphatische Polyurethan-Produkte sind nach dem Abschleifen der Fugen nicht mehr stabil und zeigen nach kurzer Zeit Rissbildung, vor allem wenn es sich um weisse Produkte handelt.

Werden anstelle von aliphatischen Polyurethanen kommerzielle silanvernetzende Produkte, vor allem weisse, eingesetzt, erhält man eine höhere Stabilität. Auch hier zeigen sich jedoch nach 1000h ebenfalls Risse. Ausserdem ergibt sich keine ausreichende Stabilität im feucht-warmen Klima.

Bislang sind auf dem Markt nur schwarze Formulierungen erhältlich, die den oben genannten Anforderungen entsprechen. Die auf dem Markt befindlichen weißen und grauen Produkte werden den Anforderungen hinsichtlich Verarbeitbarkeit, UV-Stabilität und Stabilität gegenüber feucht-warmem Klima nicht gerecht.

### Darstellung der Erfindung

Die Aufgabe der vorliegenden Erfindung bestand darin, die vorstehend beschriebenen Probleme zu überwinden. Insbesondere bestand die Aufgabe in der Bereitstellung einer Zusammensetzung, die das Verfugen von Holzfugen und das Schleifen der ausgehärten Zusammensetzung ermöglicht, eine gute Verarbeitbarkeit, und auch nach einer Schleifbehandlung eine hohe UV-Stabilität und Stabilität gegenüber feucht-warmem Klima aufweist, insbesondere für marine Anwendungen, wobei die Zusammensetzung auch als weiße oder graue Formulierung formuliert werden kann. Ferner sollte eine hohe Vergilbungsbeständigkeit vor allem für weiße Formulierungen erreicht werden.

Überaschenderweise wurde nun gefunden, dass diese Aufgabe durch die Verwendung eines Klebstoffs auf Basis eines silanfunktionellen Polymers, welcher ohne Zinnkatalysator auskommt, gelöst werden kann.

Die vorliegende Erfindung betrifft daher die Verwendung eines Klebstoffs umfassend
- mindestens ein silanfunktionelles Polymer P;
- mindestens einen Katalysator für die Vernetzung von silanfunktionellen Polymeren, ausgewählt aus der Gruppe bestehend aus Organotitanat, Organozirconat und Organoaluminat;
- mindestens eine Base; sowie
- mindestens einen Haftvermittler ausgewählt aus Alkoxymercaptosilan und Aminoalkoxysilan
   zum Füllen von Holzfugen, wobei das Holz natürliches oder synthetisches Holz ist.

Es ist bevorzugt, dass der in die Holzfuge gefüllte Klebstoff nach der Aushärtung geschliffen wird. Das Schleifen dient zum Glätten der Oberfläche. Der erfindungsgemäß verwendete Klebstoff zeigt eine gute Verarbeitbarkeit und ist im ausgehärteten Zustand schleifbar. Bei dem erfindungsgemäß verwendeten Klebstoff handelt es sich daher vorzugsweise um einen schleifbaren Klebstoff.

Ein schleifbarer Klebstoff ist ein Klebstoff, der nach der Härtung mit einem Bandschleifer, der ein Schleifpapier mit Korngrösse 80 benutzt, bearbeitet werden kann. Nach dem Schleifen dürfen keine Schleifspuren auf dem Klebstoff sichtbar sein und es muss eine glatte Oberfläche vorhanden sein. Übliche Klebstoffe sind häufig nicht schleifbar, d.h. wenn er wie vorstehend angegeben geschliffen wird, "verschmiert" der gehärtete Klebstoff und es ergeben sich Schleifspuren, so dass keine glatte Oberfläche gebildet wird.

Überraschenderweise zeigt auch der nach Aushärtung geschliffene Klebstoff eine hohe UV-Stabilität und eine sehr gute Stabilität gegenüber feucht-warmer Atmosphäre, so dass er für marine Anwendungen besonders gut geeignet ist. Diese Eigenschaften werden erstaunlicherweise auch erreicht, wenn der Klebstoff weiß oder grau ist. Die Vergilbungsbeständigkeit ist sehr gut, insbesondere bei weißen Formulierungen.

Ein weiterer Aspekt der Erfindung ist ein entsprechendes Verfahren. Besonders bevorzugte Ausführungsformen der Erfindung sind Gegenstand der abhängigen Ansprüche.

### Wege zur Ausführung der Erfindung

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst auch sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene hydrolysierbare Gruppen, insbesondere Alkoxygruppen oder Acyloxygruppen, aufweisen, und andererseits mindestens einen, über eine Si-C-Bindung, direkt an das Siliciumatom gebundenen organischen Rest aufweisen. Silane mit Alkoxy- oder Acyloxygruppen sind dem Fachmann auch als Organoalkoxysilane bzw. Organoacyloxysilane bekannt. "Tetraalkoxysilane" stellen folglich gemäss dieser Definition keine Organosilane dar.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" werden Organosilane bezeichnet, deren organischer Rest mindestens eine Aminogruppe bzw. mindestens eine Mercaptogruppe aufweist. Die Begriffe "Organotitanat", "Organozirconat" und "Organoaluminat" bezeichnen im vorliegenden Dokument Verbindungen, welche mindestens einen über ein Sauerstoffatom an das Titan-, Zirconium- bzw. Aluminiumatom gebundenen Liganden aufweisen.

Als "mehrzähniger Ligand" bzw. "Chelatligand" wird im vorliegenden Dokument ein Ligand verstanden, welcher mindestens zwei freie Elektronenpaare besitzt und mindestens zwei Koordinationsstellen des Zentralatoms besetzen kann. Ein zweizähniger Ligand vermag entsprechend zwei Koordinationsstellen eines Zentralatoms zu besetzen.

Der Begriff "Primer" bezeichnet im vorliegenden Dokument eine dünne Schicht von typischerweise dünner als 1 mm, insbesondere zwischen 1 und 200 µm, bevorzugt zwischen 1 und 100 µm, einer Haftvermittlerzusammensetzung, welche als Voranstrich auf die Oberfläche eines Substrats appliziert wird und zu einer Verbesserung der Haftung des Klebstoffs an einem Substrat führt. Entsprechend wird der Begriff "primerlos" für das das Verkleben, Verfugen, Abdichten oder Beschichten von Substraten ohne deren Vorbehandlung mit einem Primer verwendet.

Unter dem "Molekulargewicht" versteht man im vorliegenden Dokument stets das Molekulargewichtsmittel Mn (Zahlenmittel), welches durch Gelpermeationschromatographie (GPC) ermittelt werden kann.

Erfindungsgemäss wird ein spezieller Klebstoff zum Füllen von Holzfugen verwendet. Bei dem Klebstoff handelt es sich insbesondere um einen feuchtigkeitshärtenden Klebstoff, der in Gegenwart von Wasser, z.B. in Form von Luftfeuchtigkeit, aushärtet.

Der Klebstoff enthält mindestens ein silanfunktionelles Polymer P, welches bevorzugt eine, zwei oder mehr Gruppen, bevorzugter Endgruppen, der Formel (I) aufweist.

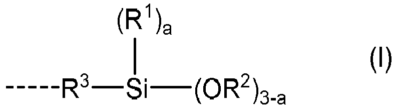

Dabei steht der Rest R¹ für eine Alkylgruppe mit 1 bis 8 C-Atomen, insbesondere für eine Methyl- oder für eine Ethylgruppe.

Der Rest R² steht für eine Acyl- oder Alkylgruppe mit 1 bis 5 C-Atomen, insbesondere für eine Methyl- oder für eine Ethyl- oder für eine Isopropylgruppe. Meist bevorzugt steht R² für eine Ethylgruppe.

Der Rest R³ steht für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoffatomen.

Der Index a steht für einen Wert von 0 oder 1 oder 2, insbesondere für einen Wert von 0.

Innerhalb einer Silangruppe der Formel (I) stehen R¹ und R² jeweils unabhängig voneinander für die beschriebenen Reste. So sind beispielsweise auch Verbindungen der Formel (I) möglich, welche Ethoxy-Dimethoxy-Alkylsilane (R² = Methyl, R² = Methyl, R² = Ethyl) darstellen.

In einer ersten Ausführungsform ist das silanfunktionelle Polymer P ein silanfunktionelles Polyurethanpolymer **P1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** bevorzugt gänzlich frei von Isocyanatgruppen ist.

Das Silan, welches mindestens eine gegenüber Isocyanatgruppen reaktive Gruppe aufweist, ist beispielsweise ein Mercaptosilan, ein Aminosilan oder ein Hydroxysilan, insbesondere ein Aminosilan. Bevorzugt ist das Aminosilan ein Aminosilan **AS** der Formel (Ia), 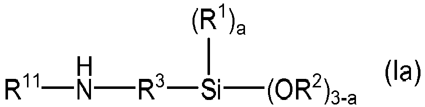 wobei R¹, R², R³ und a bereits vorhergehend beschrieben worden sind, und R¹¹ für ein Wasserstoffatom oder für einen linearen oder verzweigten Kohlenwasserstoffrest mit 1 bis 20 C-Atomen, welcher gegebenenfalls cyclische Anteile aufweist, oder für einen Rest der Formel (II) steht.

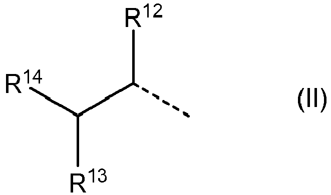

Dabei stehen die Reste R¹² und R¹³, unabhängig voneinander, für ein Wasserstoffatom oder für einen Rest aus der Gruppe umfassend -R¹⁵, -CN und -COOR¹⁵.

Der Rest R¹⁴ steht für ein Wasserstoffatom oder für einen Rest aus der Gruppe umfassend -CH₂-COOR¹⁵, -COOR¹⁵, CONHR¹⁵, -CON(R¹⁵)₂, -CN, -NO₂, -PO(OR¹⁵)₂, -SO₂R¹⁵ und -SO₂OR¹⁵.

Der Rest R¹⁵ steht für einen, gegebenenfalls mindestens ein Heteroatom enthaltenden, Kohlenwasserstoffrest mit 1 bis 20 C-Atomen.

Beispiele für geeignete Aminosilane **AS** sind primäre Aminosilane wie 3-Aminopropyltriethoxysilan, 3-Aminopropyldiethoxymethylsilan; sekundäre Aminosilane wie N-Butyl-3-aminopropyltriethoxysilan, N-Phenyl-3-aminopropyltriethoxysilan; die Produkte aus der Michael-artigen Addition von primären Aminosilanen wie 3-Aminopropyltriethoxysilan oder 3-Aminopropyldiethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Triethoxysilyl-propyl)-amino-bernsteinsäuredimethyl- und - diethylester; sowie Analoga der genannten Aminosilane mit Methoxy- oder Isopropoxygruppen anstelle der bevorzugten Ethoxygruppen am Silicium. Als Aminosilane **AS** besonders geeignet sind sekundäre Aminosilane, insbesondere Aminosilane **AS,** bei denen R⁴ in Formel (III) verschieden von H ist. Bevorzugt sind die Michael-artigen Addukte, insbesondere N-(3-Triethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat bevorzugt so gewählt, dass im resultierenden Polyurethanpolymer nach der Umsetzung aller Hydroxylgruppen des Polyols ein Gehalt an freien Isocyanatgruppen von 0,1 bis 5 Gew.-%, bevorzugt 0,1 bis 2,5 Gew.-%, besonders bevorzugt 0,2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1,5:1 bis 2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH-oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0,02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol. Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma BASF Polyurethanes GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Diese genannten Polyole weisen bevorzugt ein Molekulargewicht von 250 bis 30'000 g/mol, insbesondere von 1'000 bis 30'000 g/mol, und/oder eine mittlere OH-Funktionalität im Bereich von 1,6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche aliphatische, cycloaliphatische oder aromatische Polyisocyanate, insbesondere Diisocyanate, verwendet werden. Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Beispielsweise sind geeignete methoxysilanfunktionelle Polymere P1 kommerziell erhältlich unter dem Handelsnamen Polymer ST50 von der Firma Hanse Chemie AG, Deutschland, sowie unter dem Handelsnamen Desmoseal^{®} von der Firma Bayer MaterialScience AG, Deutschland. Bevorzugt werden ethoxysilanfunktionelle Polymere **P1** eingesetzt.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.

Als Isocyanatosilan **IS** geeignet sind Verbindungen der Formel (Ib). 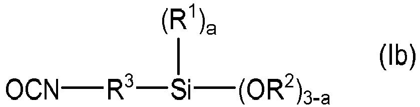 wobei R¹, R², R³ und a bereits vorhergehend beschrieben wurden.

Beispiele für geeignete Isocyanatosilane **IS** der Formel (Ib) sind 3-Isocyanatopropyltriethoxysilan, 3-Isocyanatopropyldiethoxymethylsilan, und deren Analoga mit Methoxy- oder Isopropoxygruppen anstelle der Ethoxygruppen am Silicium.

Bevorzugt weist das Polymer als gegenüber Isocyanatgruppen reaktive funktionelle Endgruppen Hydroxylgruppen auf. Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0,02 mEq/g und mit einem Molekulargewicht im Bereich von 4'000 bis 30'000 g/mol, insbesondere solche mit einem Molekulargewicht im Bereich von 8'000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS** der Formel (Ib). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1,3:1 bis 4:1, insbesondere von 1,8:1 bis 3:1. Gegebenenfalls kann das Polyurethanpolymer unter Mitverwendung von Weichmachern hergestellt werden, wobei die verwendeten Weichmacher keine gegenüber Isocyanaten reaktive Gruppen enthalten. Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete methoxysilanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland, sowie unter dem Handelsnamen Incorez STP der Firma Sika Incorez, UK. Bevorzugt werden ethoxysilanfunktionelle Polymere **P2** eingesetzt.

In einer dritten Ausführungsform ist das silanfunktionelle Polymer **P** ein silanfunktionelles Polymer **P3,** welches erhältlich ist durch eine Hydrosilylierungsreaktion von Polymeren, mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung hiermit eingeschlossen ist.

Beispielsweise sind geeignete methoxysilanfunktionelle Polymere **P3** kommerziell erhältlich unter den Handelsnamen MS-Polymer^{®} S203(H), S303(H), S227, S810, MA903 und S943, Silyl^{®} SAX220, SAX350, SAX400 und SAX725, Silyl^{®} SAT350 und SAT400, sowie XMAP^{®} SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan. Bevorzugt werden ethoxysilanfunktionelle Polymere **P3** eingesetzt.

Weiterhin ist es auch möglich als silanfunktionelles Polymer **P** andere kommerziell erhältliche silanfunktionelle Polymere einzusetzen, beispielweise solche, wie sie unter dem Handelsnamen Tegopac® von Evonik Industries erhältlich sind, insbesondere sind dies Tegopac® Seal 100, Tegopac® Bond 150, Tegopac® Bond 250.

Üblicherweise ist das silanfunktionelle Polymer **P** in einer Menge von 10 bis 80 Gew.-%, bevorzugt in einer Menge von 15 bis 60 Gew.-%, bezogen auf den gesamte Klebstoff, vorhanden.

Weiterhin umfasst der Klebstoff mindestens einen Katalysator für die Vernetzung silanfunktioneller Polymere ausgewählt aus der Gruppe bestehend aus Organotitanat, Organozirkonat und Organoaluminat. Diese Katalysatoren weisen insbesondere Alkoxygruppen, Sulfonatgruppen, Carboxylgruppen, Dialkylphosphatgruppen, Dialkylpyrophosphatgruppen und -diketonatgruppen auf.

Besonders geeignete Organotitanate sind die Folgenden:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet.

Als Alkoholat-Liganden insbesondere geeignet sind Isobutoxy, n-Butoxy, Isopropoxy, Ethoxy und 2-Ethylhexoxy. Ganz besonders geeignet sind Bis(ethylacetoacetato)-diisobutoxy-titan(IV), Bis(ethylacetoacetato)-diisopropoxy-titan(IV), Bis(acetylacetonato)-diisopropoxy-titan(IV), Bis(acetylacetonato)-diisobutoxy-titan(IV), Tris(oxyethyl)amin-isopropoxy-titan(IV), Bis[tris(oxyethyl)amin]-diisopropoxy-titan(IV), Bis(2-Ethylhexan-1,3-dioxy)-titan(IV), Tris[2-((2-Aminoethyl)amino)ethoxy]-ethoxy-titan(IV), Bis(Neopentyl(diallyl)oxy-diethoxy-titan(IV), Titan(IV)-tetrabutanolat, Tetra-(2-ethylhexyloxy)titanat, Tetra-(isopropoxy)titanat und Polybutyltitanat. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Du Pont / Dorf Ketal); Tytan PBT, TET, X85, TAA, ET, S2, S4 oder S6 (alle von TensoChema) und Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals).

Besonders geeignete Organozirkonate sind die kommerziell erhältlichen Typen Ken-React^{®} NZ^{®} 38J, KZ^{®} TPPJ, KZ^{®} TPP, NZ^{®} 01, 09, 12 38, 44 oder 97 (alle von Kenrich Petrochemicals) und Snapcure^{®} 3020, 3030, 1020 (alle von Johnson Matthey & Brandenberger). Ein besonders geeignetes Organoaluminat ist der kommerziell erhältliche Typ K-Kat 5218 (von King Industries).

Meist bevorzugt ist der Klebstoff im Wesentlichen frei von Zinn oder organischen Zinnverbindungen, da diese einerseits aus ökologischen und toxikologischen Gründen nicht für jede Anwendung geeignet sind.

Bevorzugt umfasst der Klebstoff ≤ 0,1 Gew.-%, insbesondere ≤ 0,06 Gew.-%, bevorzugt ≤ 0,01 Gew.-%, Zinn oder organische Zinnverbindungen. Meist bevorzugt enthält die Klebststoff kein Zinn und keine organischen Zinnverbindungen, wie sie typischerweise zur Aushärtung von Zusammensetzungen auf Basis von silanterminierten Polymeren eingesetzt werden.

Der Anteil des Katalysators beträgt vorzugsweise 0,1 bis 10 Gew.-%, insbesondere 0,2 bis 4 Gew.-%, bevorzugt 0,3 bis 3 Gew.-%, meist bevorzugt 0,5 bis 1,5 Gew.-%, des gesamten Klebstoffs.

Weiterhin umfasst der Klebstoff mindestens eine Base. Als Base eignen sich insbesondere stickstoffhaltige Verbindungen. Insbesondere ist die Base ausgewählt ist aus Guanidin, Imidazol, Imidazolin, bicyclisches Amidin oder aus Derivaten dieser Verbindungen.

Bevorzugt sind Amine wie N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, Guanidine wie insbesondere Tetramethylguanidin, 2-Guanidinobenzimidazol, Acetylacetoneguanidin, 1,3-Dio-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.

Der Anteil der Base beträgt vorzugsweise 0,01 bis 3 Gew.-%, insbesondere 0,1 bis 2 Gew.-%, bevorzugt 0,2 bis 1 Gew.-%, des gesamten Klebstoffs.

Weiterhin umfasst der Klebstoff mindestens einen Haftvermittler ausgewählt aus Alkoxymercaptosilan und Aminoalkoxysilan. Es können ein oder mehrere Alkoxymercaptosilane, ein oder mehrere Aminoalkoxysilane oder Mischungen von mindestens einem Alkoxymercaptosilan und mindestens einem Aminoalkoxysilan eingesetzt werden.

Als Aminoalkoxysilan eignen sich vorzugsweise Aminosilane AS der Formel (Ia), worin R² für eine Alkylgruppe mit 1 bis 5 C-Atomen, insbesondere für eine Methyl- oder für eine Ethyl- oder für eine Isopropylgruppe, meist bevorzugt für eine Ethylgruppe, steht, die vorstehend als Komponente für das silanfunktionelle Polymer beschrieben wurden, so dass darauf verwiesen werden kann, einschließlich der dort angegebenen bevorzugten Ausführungsformen und konkreten Beispiele, mit der Maßgabe das R² eine Alkylgruppe ist.

Der Haftvermittler ist bevorzugt ein Alkoxymercaptosilan und besonders bevorzugt ein Ethoxymercaptosilan. Insbesondere handelt es sich bei dem Alkoxymercaptosilan um eines der Formel (III).

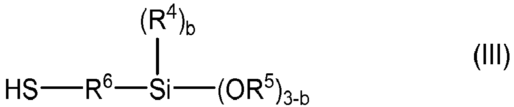

Dabei steht der Rest R⁴ für eine Alkylgruppe mit 1 bis 8 C-Atomen, insbesondere für eine Methylgruppe.

Der Rest R⁵ steht für eine Alkylgruppe mit 1 bis 5 C-Atomen, insbesondere für eine Methyl- oder für eine Ethyl- oder für eine Isopropylgruppe. Meist bevorzugt steht R⁵ für eine Ethylgruppe.

Der Rest R⁶ steht für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.

b steht für einen Wert von 0, 1 oder 2, bevorzugt 0.

Besonders bevorzugt ist ein Alkoxymercaptosilan der Formel (III), worin R⁵ für eine Ethylgruppe steht, d.h. ein Ethoxymercaptosilan. Das Ethoxymercaptosilan ist bevorzugt 3-Mercaptopropyltriethoxysilan oder 3-Mercaptopropyldiethoxymethylsilan. In dem Klebstoff kann das Ethoxymercaptosilan auch in einer Form vorliegen, bei welcher die Mercaptogruppe blockiert vorliegt, beispielsweise als thiocarboxylatfunktionelles Silan. In diesem Fall wird die Mercaptogruppe unter Aushärtungsreaktionsbedingungen, typischerweise unter Einfluss von Wasser, freigesetzt.

Der Anteil des Haftvermittlers, welches bevorzugt ein Alkoxymercaptosilan, besonders bevorzugt ein Ethoxymercaptosilan ist, beträgt vorzugsweise 0,1 bis 7 Gew.-%, insbesondere 0,2 bis 4 Gew.-%, bevorzugt 0,3 bis 1,5 Gew.-%, des gesamten Klebstoffs.

Vorzugsweise weist der Klebstoff weiterhin einen Füllstoff auf. Der Füllstoff beeinflusst sowohl die rheologischen Eigenschaften des nicht ausgehärteten Klebstoffs als auch die mechanischen Eigenschaften und die Oberflächenbeschaffenheit des ausgehärteten Klebstoffs.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid. Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf den gesamten Klebstoff.

Der Klebstoff kann auch ein Tetraalkoxysilan, insbesondere Tetraethoxysilan, enthalten, was in einigen Ausführungsformen vorteilhaft sein kann.

Weiterhin kann der Klebstoff zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat oder hydrierte Phthalate beispielswiese Hexamoll DINCH, Adipate, beispielsweise Dioctyladipat, Sulphonate, beispielsweise Mesamoll (Lanxess), Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Tetraethoxysilan, Vinyltriethoxysilan, α-funktionelle Silane wie N-(Silylmethyl)-O-methyl-carbamate, insbesondere N-(Methyldiethoxysilylmethyl)-O-methyl-carbamat, (Methacryloxymethyl)silane, Ethoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

In einer bevorzugten Ausführungsform ist der Klebstoff im wesentlichen phthalatfrei bzw. phthalatfrei. Insbesondere enthält der Klebstoff bevorzugt keine Phthalatweichmacher. Bevorzugte Weichmacher sind beispielweise hydrierte Phthalate.

Weiterhin können gegebenenfalls so genannte Reaktivverdünner eingesetzt werden, welche bei der Aushärtung des Klebstoffs, insbesondere durch Reaktion mit den Silangruppen, in die Polymermatrix eingebunden werden.

Der Klebstoff umfasst bevorzugt keine Bestandteile, welche bei der Aushärtung Methanol abspalten. Derartige Bestandteile sind neben dem silanfunktionellen Polymer **P** gegebenenfalls vorhandene reaktive Bestandteile wie z.B. Haftvermittler, Trocknungsmittel, Reaktivverdünner, Vernetzer und andere vorhergehend beschriebene Bestandteile.

Bestandteile, welche bei der Aushärtung Methanol abspalten, sind typischerweise Methoxygruppen aufweisende, silanfunktionelle Verbindungen. Der Klebstoff umfasst also bevorzugt keine silanfunktionellen Verbindungen, welche Methoxysilangruppen aufweisen. Bevorzugt weisen sämtliche in dem Klebstoff vorhandene silanfunktionelle Verbindungen Endgruppen der Formel (I) auf, wobei die Reste R¹, R² und R³ sowie der Index a bereits vorhergehend beschrieben worden sind. Meist bevorzugt sind alle in der Zusammensetzung enthaltenen hydrolysierbaren Silangruppen Ethoxysilangruppen, insbesondere Triethoxysilangruppen.

In einer meist bevorzugten Ausführungsform ist das silanfunktionelle Polymer **P** ein silanfunktionelles Polymer **P1** und/oder weist als Silangruppen nur Triethoxysilangruppen auf. Weiterhin weisen gegebenenfalls vorhandene Silangruppen enthaltende Additive bevorzugt als Silangruppen nur Triethoxysilangruppen oder Alkyldiethoxysilangruppen, insbesondere Methyl-oder Ethyldiethoxysilangruppen, bevorzugt Triethoxysilangruppen, auf.

Es ist vorteilhaft, alle genannten, in dem Klebstoff gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich der Klebstoff in seinen Eigenschaften, insbesondere den Applikations- und Aushärtungseigenschaften, bei der Lagerung nicht oder nur wenig verändert. Dies bedingt, dass zur chemischen Aushärtung des beschriebenen Klebstoffs führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in den Klebstoff chemisch oder physikalisch zu trocknen.

Der vorhergehend beschriebene Klebstoff wird vorzugsweise unter Ausschluss von Feuchtigkeit hergestellt und aufbewahrt. Typischerweise ist der Klebstoff lagerstabil, das heisst, er kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in seinen Eigenschaften nach der Aushärtung in einem für ihren Gebrauch relevanten Ausmass verändert. Üblicherweise wird die Lagerstabilität über die Messung der Viskosität oder der Auspresskraft ermittelt.

Der Klebstoff kann z.B. durch Zusatz geeigneter Farbmittel, z.B. Pigmenten bzw. Füllstoffen, jede beliebige Farbe aufweisen. Der Klebstoff ist bevorzugt schwarz, beige, weiß oder grau und bevorzugter weiß, schwarz oder grau, besonders bevorzugt weiß oder schwarz.

Der Klebstoff weist z.B. eine Viskosität im Bereich von 20 bis 1500 Pas, bevorzugt 35 bis 400 Pas, besonders bevorzugt 35 bis 200 Pas, bei einer Temperatur von 23°C und einer Scherrate von 10 s⁻¹, auf. Zur Messung der Viskosität wird ein RC30 der Firma Rheotec mit Platte-Platte Konfiguration mit einem Spalt von 0,05 mm verwendet.

Der Klebstoff weist ferner bevorzugt einen Verlauf im vertikalen U-Profil (2 x 2,5 x 20 cm) kleiner 2 cm auf. Zur Bestimmung wird das horizontal gelegte U-Profil von 2 x 2,5 x 20 cm vollständig mit dem Klebstoff gefüllt, gegebenenfalls über den Rand quellender Klebstoff wird vorsichtig abgestreift. Nach der Füllung wird das U-Profil sofort vertikal aufgerichtet. Der Klebstoff läuft dann am unteren Ende über eine gewisse Strecke heraus. Der Verlauf wird am unteren Ende des U-Profils nach 24h mit einem Zentimetermaß bestimmt. Der Versuch wird bei Normbedingungen (23°C, 50% relativer Feuchtigkeit) durchgeführt.

Die Holzfuge kann aus natürlichem oder synthetischem Holz sein. Es kann sich um jedes beliebige natürliche oder synthetische Holz handeln. Die Fuge kann auch aus zwei oder mehr unterschiedlichen Holzmaterialien sein.

Natürliches Holz ist z.B. Sperrholz, Eiche, Robinie, Ulme, Buche, Kebony, Oregon und bevorzugt Tropenholz, wie Teak, Mahagoni, Iroko, Padouk, Afromosia, Brasil Kiefer, Basralocus, Cero, Cordia, Kahja, Sipo, IPE und Doussie. Besonders bevorzugt ist Teakholz. Bei synthetischem Holz handelt es sich z.B. um Holz-Kunststoff-Verbundwerkstoffe oder Holzspanwerkstoffe, wie Spanplatten. Holz-Kunststoff-Verbundwerkstoffe und Holzspanwerkstoffe werden aus Holzresten bzw. Holzabfällen, wie z.B. Sägenebenprodukten, Holzhackschnitzeln, Holzspänen, Holzmehl oder Holzfasern, und einem Bindemittel, wie z.B. Kunstharz, einem Polyurethan oder einem Silicon, gebildet und enthalten gegebenenfalls zusätzliche Additive, wie Füllstoffe. Bei den Holzresten oder -abfällen kann es sich um Reste bzw. Abfälle der vorstehend genannten natürlichen Hölzer handeln. Ein bevorzugtes synthetisches Holz wird aus Teakholzresten oder -abfällen gebildet.

Erfindungsgemäß wird der Klebstoff für das Füllen von Holzfugen verwendet, wobei der Klebstoff primerlos angewendet werden kann. Bei dem Klebstoff handelt es sich insbesondere um einen feuchtigkeitshärtenden Klebstoff, der in Anwesenheit von Wasser, insbesondere in Form von Luftfeuchtigkeit, aushärtet. Nach der Aushärtung des Klebstoffs kann der gehärtete Klebstoff geschliffen werden, was auch bevorzugt ist.

Der gehärtete und geschliffene Klebstoff weist eine bemerkenswert hohe UV-Stabilität und Stabilität gegenüber warm-feuchtem Klima auf. Der ausgehärtete und geschliffene Klebstoff kann mittels QUV-Tester oder Suntester auf seine Beständigkeit geprüft werden. Suntester und QUV-Tester von Q-Lab stellen übliche Bewitterungsgeräte dar.

Der gehärtete und geschliffene Klebstoff weist bevorzugt nach 3000 Stunden im QUV-Tester oder im Suntester bei 8-facher Vergrößerung keine Risse auf. Wenn der Klebstoff weiß, grau oder beige ist, ist es ferner bevorzugt, dass der gehärtete und geschliffene Klebstoff nach 3000 Stunden im QUV-Tester oder im Suntester eine Farbabstand delta E von kleiner 2, bevorzugt kleiner 1,9, im Vergleich zu dem gehärteten und geschliffenen Klebstoff vor der Bewitterung im QUV-Tester oder Suntester aufweist. Der Farbabstandstest ist bei schwarzen Klebstoffen nicht sinnvoll.

Zur Bestimmung der Beständigkeit im QUV-Tester oder Suntester wird folgendes Verfahren verwendet. Zunächst wird eine Probe hergestellt, indem eine Holzfuge mit dem Klebstoff verfüllt wird. Die Härtung erfolgt bei 23°C und 50% relativer Feuchtigkeit. Nach der Härtung wird der Klebstoff mit einem Bandschleifer mit einem Schleifpapier der Korngrösse 80 glatt geschliffen. An der frischen geschliffenen Probe erfolgt eine Farbmessung. Danach wird die Probe einer Bewitterung von 3000 h im QUV-Tester oder im Suntester unterzogen und anschließend wird die bewitterte Probe bei 8-facher Vergrößerung auf Risse untersucht und die Farbmessung wird wiederholt. Die Farbmessungen werden nur bei weißen, beigen oder grauen Klebstoffen durchgeführt. Mithilfe von Schablonen können die Farbmessungen vorher und nachher an derselben Position durchgeführt werden. Aus den Ergebnissen der Farbmessungen vor und nach Bewitterung wird der Farbabstand delta E bestimmt.

Die Farbmessung bzw. die Bestimmung des Farbabstands delta E wird mit einer Konica Minolta CM600d, Methode: CSI 10° D65, durchgeführt. Die Prüfung nach Rissen erfolgt visuell mit einem Mikroskop bei 8-facher Vergrößerung.

Die Bewitterung bzw. Alterung der Klebstoffproben im QUV-Tester erfolgt gemäss ISO11507 bzw. ASTM6154 mit UV-A Fluoreszenslampen mit einem Zyklus von 6h Bestrahlung bei 60°C Schwarzfeldtemperatur gefolgt von 2h Kondensationsbedingungen bei 50°C.

Die Bewitterung bzw. Alterung der Klebstoffproben im Suntester (Gerät: Atlas Suntester XLS) erfolgt gemäss ISO11507 bzw. ASTM6154 mit einer Dosis von 270000 kJ/m², Schwarzfeldtemperatur 70°C.

Ferner weist der Klebstoff bevorzugt einen Schwund kleiner 5% auf. Der Schwund wird bestimmt gemäß ISO 10563.

Besonders geeignet ist die erfindungsgemässe Verwendung für Anwendungen im marinen oder limnischen Bereich, insbesondere im marinen Bereich, insbesondere für den Boots- und Schiffsbau oder die Reparatur von Booten oder Schiffen, z.B. für Decks.

Die Erfindung betrifft auch ein Verfahren zum Verfugen einer Holzfuge, wobei das Holz natürliches oder synthetisches Holz ist, wobei das Verfahren a) das Füllen der Holzfuge mit dem erfindungsgemäß verwendeten Klebstoff, b) das Aushärten des Klebstoffs in der Holzfuge und c) das Schleifen des ausgehärteten Klebstoffs umfasst.

Die Aushärtung kann z.B. bei Temperaturen im Bereich von 5 bis 40°C durchgeführt werden. Die Aushärtungsdauer kann in Abhängigkeit von Temperatur und Luftfeuchtigkeit variieren. Nach der Aushärtung kann der Klebstoff geschliffen werden, um eine glatte Oberfläche zu erhalten. Der Klebstoff zeigt auch im geschliffenen Zustand eine hohe UV-Stabilität, Beständigkeit gegenüber feucht-warmem Klima und eine gute Vergilbungsbeständigkeit, selbst wenn er grau oder insbesondere weiß ist.

### Beispiele

### Messmethoden

Die Viskosität und der Verlauf der hergestellten Klebstoffe wurde gemäß den vorstehend in der Beschreibung beschriebenen Methoden bestimmt. Die Bestimmung der Beständigkeit im QUV-Tester oder im Suntester erfolgte ebenfalls gemäß dem in der Beschreibung angegebenen Verfahren.

### Beispiel 1

### Herstellung des silanfunktionellen Polymers P

Unter Stickstoffatmosphäre wurden 700 g Polyol Acclaim^{®} 12200 (Bayer MaterialScience AG, Deutschland; low monol Polyoxypropylendiol; OH-Zahl 11,0 mg KOH/g; Wassergehalt ca. 0,02 Gew.-%), 32,1 g Isophorondiisocyanat (Vestanat^{®} IPDI, Evonik Degussa GmbH, Deutschland), 85,4 g 2,2,4-Trimethyl-1,3-pentandioldiisobutyrat (Eastman TXIB™; Eastman Chemical Company, USA) und 0,4 g Tyzor^{®} IBAY (von DuPont, USA) unter stetigem Rühren auf 90°C aufgeheizt und bei dieser Temperatur belassen. Nach einer Stunde Reaktionszeit wurde mittels Titration ein freier Gehalt an Isocyanatgruppen von 0,7 Gew.-% erreicht. Anschliessend wurden 0,14 mol (entspricht einer stöchiometrischen Umsetzung der NCO-Gruppen mit Silan) reaktives Silan **(Int-EtO)** beigefügt und für weitere 2 bis 3 Stunden bei 90°C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23°C) abgekühlt und unter Ausschluss von Feuchtigkeit aufbewahrt (theoretischer Polymergehalt = 90%).

Das reaktive Silan **Int-EtO** (N-(3-Triethoxysilyl-propyl)-amino-bernsteinsäure-diethylester) wurde wie folgt hergestellt: 100 g 3-Aminopropyltriethoxysilan (Dynasylan^{®} AMEO von Evonik Degussa GmbH, Deutschland) wurden vorgelegt. Unter gutem Rühren wurden bei Raumtemperatur langsam 77,8 g Maleinsäure-diethylester (Fluka Chemie GmbH, Schweiz) zugegeben und die Mischung während 12 Stunden bei 60°C gerührt.

### Herstellung des Thixotropierungsmittels TM

In einem Vakuummischer wurden 1000 g 1,2-Cyclohexandicarbonsäure diisononylester (DINCH, Hexamoll^{®} DINCH, BASF SE, Deutschland) und 160 g 4,4'-Diphenylmethandiisocyanat (Desmodur^{®} 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel **TM** enthält 20 Gew.-% Thixotropierungsmittel in 80 Gew.-% DINCH.

### Herstellung des Klebstoffs

In einem Vakuummischer wurden 24 Gewichtsteile silanfunktionelles Polymer **P,** 7 Gewichtsteile 1,2-Cyclohexandicarbonsäurediisononylester (DINCH, Hexamoll^{®} DINCH, BASF SE, Deutschland), 17 Gewichtsteile Thixotropierungsmittel **TM** und 1 Gewichtsteil Tetraethoxysilan (Dynasylan^{®} A von Evonik Degussa GmbH, Deutschland) während 5 Minuten gut vermischt. Anschliessend wurden 46 Gewichtsteile getrocknete, gefällte Kreide (Socal^{®} U1S2, Solvay SA, Belgien) und 3 Gewichtsteile Titandioxid (Kronos) während 15 Minuten bei 60°C eingeknetet. Bei ausgeschalteter Heizung wurden anschliessend 0,5 Gewichtsteile Katalysator (Tyzor^{®} IBAY, DuPont, USA, ein Titanethylacetoacetat-Komplex, 0,5 Gewichtsteile DBU (1,8-Diazabicyclo-5,4,0-undecen-7, BASF), 1 Gewichtsteil 3-Mercaptopropyltriethoxysilan (Silquest^{®}A1891, Momentive) unter Vakuum während 10 Minuten zu einer homogenen Paste verarbeitet. Der hergestellte Klebstoff wurde dann in innenlackierte Aluminium-Spreizkolbenkartuschen abgefüllt.

Der erhaltene Klebstoff ist weiß. Die Viskosität, der Verlauf im U-Profil und die Beständigkeit im QUV-Tester und im Suntester der geschliffenen Fuge wurden untersucht. Folgende Ergebnisse wurden erhalten:
Viskosität (23°C): 300 Pas
Verlauf im U-Profil: 0,2 cm
Delta E nach 3000h im Suntester oder QUV-Tester: 1,5
Keine Rissbildung in geschliffener Fuge nach 3000h im Suntester oder QUV-Tester

### Beispiel 2

Die Herstellung des Klebstoffs gemäß Beispiel 1 wurde wiederholt, außer dass anstelle von 3 Gewichtsteilen Titandioxid 3 Gewichtsteile Graupigment eingesetzt wurden. Auf diese Weise wurde ein grauer Klebstoff erhalten. Die Prüfungen aus Beispiel 1 wurden wiederholt. Es wurden folgende Ergebnisse erhalten.
Viskosität (23°C): 300 Pas
Verlauf im U-Profil: 0,3 cm
Delta E nach 3000h im Suntester oder QUV-Tester: 1,8
Keine Rissbildung in geschliffener Fuge nach 3000h im Suntester oder QUV-Tester

### Beispiel 3

Die Herstellung des Klebstoffs gemäß Beispiel 1 wurde wiederholt, außer dass anstelle von 3 Gewichtsteilen Titandioxid 3 Gewichtsteile Russ eingesetzt wurden. Auf diese Weise wurde ein schwarzer Klebstoff erhalten. Die Prüfungen aus Beispiel 1 wurden wiederholt, wobei delta E nicht bestimmt wurde, da dies für schwarze Materialien sinnlos ist. Es wurden folgende Ergebnisse erhalten.
Viskosität (23°C): 400 Pas
Verlauf im U-Profil: 0,1 cm
Keine Rissbildung in geschliffener Fuge nach 3000h im Suntester oder QUV-Tester

### Vergleichsbeispiel 1

Es wurde ein handelsüblicher Klebstoff auf Basis von aliphatischem Polyurethan auf gleicher Weise wie die vorstehenden Beispiele untersucht, wobei folgende Ergebnisse erhalten wurden.
Viskosität (23°C): 300 Pas
Verlauf im U-Profil: 0,2 cm
Delta E nach 3000h Suntester oder QUV-Tester: 3
Rissbildung in geschliffener Fuge nach 3000h im Suntester oder QUV-Tester, erste Risse wurden bereits nach 500h beobachtet

### Vergleichsbeispiel 2

Es wurde ein handelsüblicher Klebstoff auf Basis eines silanterminierten Polymers auf gleicher Weise wie die vorstehenden Beispiele untersucht, wobei folgende Ergebnisse erhalten wurden.
Viskosität (23°C): 300 Pas
Verlauf im U-Profil: 0,5 cm
Delta E nach 3000h Suntester oder QUV-Tester: 2
Rissbildung in geschliffener Fuge nach 3000h im Suntester oder QUV-Tester, erste Risse wurden bereits nach 1000h beobachtet

### Vergleichsbeispiel 3

Die Herstellung des Klebstoffs gemäß Beispiel 1 wurde wiederholt, außer dass die 24 Gewichtsteile silanfunktionelles Polymer P durch 24 Gewichtsteile Polymer ST 77 (Handelsprodukt von Evonik Hanse, methoxysilanfunktionelles Polyurethanpolymer), 0,5 Gewichtsteile Tyzor^{®}IBAY durch 0,5 Gewichtsteile DBTDL (10%-ige Lösung von Dibutylzinndilaurat in Diisooctylphtalat) als Katalysator ersetzt wurden und kein DBU verwendet wurde. Auf diese Weise wurde ein weißer Klebstoff erhalten. Die Prüfungen aus Beispiel 1 wurden wiederholt. Es wurden folgende Ergebnisse erhalten.
Viskosität (23°C): 300 Pas
Verlauf im U-Profil: 0,2 cm
Delta E nach 3000h Suntester oder QUV-Tester: 2
Rissbildung in geschliffener Fuge nach 3000h im Suntester oder QUV-Tester, erste Risse wurden bereits nach 1000h beobachtet.

## Patentansprüche

1. Verwendung eines Klebstoffs umfassend
- mindestens ein silanfunktionelles Polymer **P;**
- mindestens einen Katalysator für die Vernetzung von silanfunktionellen Polymeren, ausgewählt aus der Gruppe bestehend aus Organotitanat, Organozirconat und Organoaluminat;
- mindestens eine Base; sowie
- mindestens einen Haftvermittler ausgewählt aus Alkoxymercaptosilan und Aminoalkoxysilan
zum Füllen von Holzfugen, wobei das Holz natürliches oder synthetisches Holz ist.

2. Verwendung nach Anspruch 1, **dadurch gekennzeichnet, dass** der Klebstoff nach der Aushärtung geschliffen wird.

3. Verwendung nach Anspruch 1 oder Anspruch 2, **dadurch gekennzeichnet, dass** der gehärtete und geschliffene Klebstoff nach 3000 Stunden im QUV-Tester bei 8-facher Vergrösserung keine Risse zeigt, wobei, wenn der Klebstoff weiß, beige oder grau ist, der Farbabstand delta E zwischen dem gehärteten und geschliffenen Klebstoff vor Bewitterung im QUV-Tester und nach den 3000 Stunden im QUV-Tester vorzugsweise kleiner 2 ist.

4. Verwendung nach einem der Ansprüche 1 bis 3, **dadurch gekennzeichnet, dass** das silanfunktionelle Polymer P keine Methoxysilangruppen aufweist, wobei der Klebstoff vorzugsweise keine Bestandteile enthält, welche bei der Aushärtung mit Wasser Methanol abspalten.

5. Verwendung nach einem der vorhergehenden Ansprüche, **dadurch gekennzeichnet, dass** der Klebstoff phthalatfrei ist und/oder keinen Sn-Katalysator enthält.

6. Verwendung nach einem der vorhergehenden Ansprüche, **dadurch gekennzeichnet, dass** der Haftvermittler ein Ethoxymercaptosilan, besonders bevorzugt 3-Mercaptopropyltriethoxysilan, ist.

7. Verwendung nach einem der vorhergehenden Ansprüche für marine oder limnische Anwendungen, insbesondere für den Boots- und Schiffbau oder die Reparatur von Booten oder Schiffen.

8. Verwendung nach einem der vorhergehenden Ansprüche, **dadurch gekennzeichnet, dass** der Klebstoff schwarz, beige, weiß oder grau, bevorzugt weiß, schwarz oder grau, ist.

9. Verwendung nach einem der vorhergehenden Ansprüche, **dadurch gekennzeichnet, dass** der Klebstoff eine Viskosität im Bereich von 20 bis 1500 Pas, bevorzugt 35 bis 400 Pas, bei einer Temperatur von 23 °C und einer Scherrate von 10 s⁻¹, aufweist.

10. Verwendung nach einem der vorhergehenden Ansprüche, **dadurch gekennzeichnet, dass** der Klebstoff einen Verlauf im vertikalen U-Profil (2x2,5x20 cm) kleiner 2 cm aufweist.

11. Verwendung nach einem der vorhergehenden Ansprüche, **dadurch gekennzeichnet, dass** der Klebstoff einen Schwund kleiner 5% aufweist.

12. Verwendung nach einem der vorhergehenden Ansprüche, **dadurch gekennzeichnet, dass** die Base ausgewählt ist aus Guanidin, Imidazol, Imidazolin, bicyclisches Amidin oder aus Derivaten dieser Verbindungen, wobei die Base bevorzugt 1,8-Diazabicyclo[5.4.0]undec-7-en ist.

13. Verwendung nach einem der vorhergehenden Ansprüche, **dadurch gekennzeichnet, dass** der Anteil an Haftvermittler 0,1 bis 7 Gew.-%, insbesondere 0,2 bis 4 Gew.-%, bevorzugt 0,4 bis 2 Gew.-%, des gesamten Klebstoffs beträgt, wobei der Haftvermittler bevorzugt ein Ethoxymercaptosilan ist.

14. Verfahren zum Verfugen einer Holzfuge, wobei das Holz natürliches oder synthetisches Holz ist, umfassend
a) das Füllen der Holzfuge mit einem Klebstoff,
b) das Aushärten des Klebstoffs in der Holzfuge und
c) das Schleifen des ausgehärteten Klebstoffs,
wobei der Klebstoff
- mindestens ein silanfunktionelles Polymer P;
- mindestens einen Katalysator für die Vernetzung von silanfunktionellen Polymeren, ausgewählt aus der Gruppe bestehend aus Organotitanat, Organozirconat und Organoaluminat;
- mindestens eine Base; sowie
- mindestens einen Haftvermittler ausgewählt aus Alkoxymercaptosilan und Aminoalkoxysilan
umfasst.

15. Verfahren nach Anspruch 14, wobei die Holzfuge Bestandteil eines marinen oder limnischen Gegenstands ist, insbesondere eines Bootes oder eines Schiffs, z.B. eines Decks, ist.
